# EUROPÄISCHE PATENTSCHRIFT

(11) **EP 1 108 873 B1**
(45) Veröffentlichungstag und Bekanntmachung des Hinweises auf die Patenterteilung: **28.01.2004**
(21) Anmeldenummer: 00124179.3
(22) Anmeldetag: 08.11.2000
(51) Int. Cl.: F02D 41/02, F01N 3/20, F02D 41/40, F02P 5/15, F02D 41/30

(54) **Heizverfahren für einen Abgaskatalysator eines Otto-Magermotors mit Direkteinspritzung**
Heating procedure for an exhaust catalyst of a lean Otto-engine with direct injection
Procédé de chauffage de catalyseur d'échappement de moteur Otto maigre à injection directe

(30) Priorität: 14.12.1999 DE 19960145
(43) Veröffentlichungstag der Anmeldung: 20.06.2001
(73) Patentinhaber: Bayerische Motoren Werke Aktiengesellschaft, 80809 München (DE)
(72) Erfinder: Detterbeck, Stefan, 80804 München (DE); Preuss, Florian, 80809 München (DE); Müller, Peter, 81673 München (DE)

(56) Entgegenhaltungen:
- EP-A- 0 826 869
- EP-A- 0 838 584
- US-A- 5 642 705

## Beschreibung

Die Erfindung bezieht sich nach dem Oberbegriff des Patentanspruches 1 auf ein Heizverfahren für einen Abgaskatalysator eines Otto-Magermotors mit Direkteinspritzung, bei dem ein für den Motorbetrieb durch eine mittels Motorparameter variable erste Hochdruck-Kraftstoffeinspritzung in einem vorbestimmten KW-Drehwinkelbereich vor OT gebildetes Magergemisch fremdgezündet wird und die Brenndauer des Magergemisches durch eine zweite, variable Hochdruck-Kraftstoffeinspritzung in einem vorbestimmten KW-Drehwinkelbereich nach OT verlängert wird zur Abgas-Temperaturerhöhung, wobei zusätzlich die Zündung gesteuert/geregelt nach "spät" verstellbar ist.

Ein derartiges Heizverfahren ist beispielsweise aus der DE 195 36 098 C2 bekannt, wobei zur Abgas-Temperaturerhöhung die vorbeschriebenen Verfahrensschritte dienen.

Der Erfindung liegt die Aufgabe zugrunde, das gattungsgemäße Heizverfahren um ein zusätzlich wirksames Verfahren weiterzubilden, das beispielsweise beim Kaltstart der Brennkraftmaschine, beim Desulfatieren eines Katalysators oder zur Aufrechterhaltung der Betriebstemperatur eines Katalysators einsetzbar ist.

Diese Aufgabe ist mit dem Patentanspruch 1 dadurch gelöst, dass in einem Teillastbereich in Abhängigkeit von Motorparametern die Ansaugluft entdrosselt wird und dass die Einspritzmenge der zweiten Kraftstoffeinspritzung bzw. Nacheinspritzung in Abhängigkeit der Ansaugluft-Drosselung derart gesteuert/geregelt wird, dass ein globaler Lambda-Bereich von 1,0 bis 1,5 erhalten bleibt.

Mit der Erfindung wird die Temperatur des Abgases z.B. nach einem Kaltstart wesentlich schneller derart erhöht, dass ein jeweiliger Abgaskatalysator wesentlich früher mit der Konvertierung beginnt. Die erfindungsgemäße schnellere Erwärmung beruht im wesentlichen darauf, dass z.B. beim Kaltstartbeginn mit der Doppeleinspritzung global ein Lambda von 1,0 bis 1,5 eingehalten wird und mit in Abhängigkeit von Motorparametern zunehmender Entdrosselung der Ansaugluft bei Beibehaltung des vorgenannten globalen Lambda-Bereiches die entsprechende Kraftstoffmenge über die Nacheinspritzung zugeführt wird. Damit wird das Mager-Gemisch der Haupteinspritzung zu einer verlängerten, temperatursteigernden Verbrennung gebracht. Die Erfindung ermöglicht in vorteilhafter Weise eine zusätzliche Anhebung der Abgastemperatur bei gleichzeitiger Minimierung der Motoremissionen.

Die vorbeschriebene Zielsetzung wird in Ausgestaltung der Erfindung vorteilhaft ferner dadurch unterstützt, dass mit über eine Einrichtung rückgeführtem Abgas die Verbrennungsgeschwindigkeit des Magergemisches weiter reduziert wird.

Weitere Ausgestaltungen der Erfindung sind in den Unteransprüchen 3 mit 6 angegeben.

Die Erfindung ist im folgenden beschrieben.

Bei einem Heizverfahren für einen Abgaskatalysator eines Otto-Magermotors mit Direkteinspritzung wird ein für den Motorbetrieb durch eine mittels Motorparameter variable erste Hochdruck-Kraftstoffeinspritzung - z.B. Common Rail-System - in einem vorbestimmten Kurbelwellen-Drehwinkelbereich vor OT gebildetes Magergemisch fremdgezündet und die Brenndauer dieses Magergemisches durch eine zweite, variable Hochdruck-Kraftstoffeinspritzung in einem vorbestimmten Kurbelwellen-Drehwinkelbereich nach OT verlängert zur Abgas-Temperaturerhöhung, wobei zusätzlich die Zündung gesteuert/geregelt nach "spät" verstellbar ist.

Zur aufgabengemäßen Weiterbildung des bekannten, vorbeschriebenen Heizverfahrens um ein an der Brennkraftmaschine zusätzlich wirksames Verfahren wird erfindungsgemäß vorgeschlagen, dass in einem Teillastbereich in Abhängigkeit von Motorparametem die Ansaugluft entdrosselt wird und dass die Einspritzmenge der zweiten Kraftstoffeinspritzung bzw. Nacheinspritzung in Abhängigkeit der Ansaugluft-Drosselung derart gesteuert/geregelt wird, dass ein globaler Lambda-Bereich von 1,0 bis 1,5 erhalten bleibt.

Das erfindungsgemäße Heizverfahren kann durch Kombination mit einer weiteren Ausgestaltung der Erfindung, dass mit über eine Einrichtung rückgeführtem Abgas die Verbrennungsgeschwindigkeit des Magergemisches weiter reduziert wird, vorteilhaft auf einfache Weise unterstützt werden.

Eine weitere, per se bekannte Maßnahme zur diesbezüglichen Unterstützung ist, dass die Zündung zwischen 30° Kurbelwellen-Drehwinkel vor OT und 15° Kurbelwellen-Drehwinkel nach OT nach "spät" verstellt wird.

Im Rahmen der Erfindung wird bezüglich der Doppeleinspritzung vorgeschlagen, dass die erste Einspritzmitte bzw. Mitte der Haupteinspritzung in einem Kurbelwellen-Drehwinkelbereich von 75° bis 25° vor OT und dass die zweite Einspritzmitte bzw. Mitte der Nacheinspritzung in einem Kurbelwellen-Drehwinkelbereich von 25° bis 100° nach OT getätigt wird. Bevorzugte Werte für die erste Einspritzmitte bzw. für die Haupteinspritzung werden zwischen 55° und 35° Kurbelwellen-Drehwinkel vor OT und die zweite Einspritzmitte bzw. die Nacheinspritzung zwischen 60° und 80° Kurbelwellen-Drehwinkel nach OT getätigt.

Zur Erzielung eines betriebssicheren Heizverfahrens wird das Abgasheizen bei Überschreiten einer mittels eines Sensors erfassten oder nach einem Abgastemperaturmodell vorgegebenen Abgastemperatur und/oder mit Überschreiten einer vorbestimmten integrierten Kraftstoffmenge der Nacheinspritzung beendet. Damit ist der Zerstörung eines Abgaskatalysators vorgebeugt. Das Abgasheizen kann schließlich auch durch eine Zeitablaufsteuerung beendet werden.

## Patentansprüche

1. Heizverfahren für einen Abgaskatalysator eines Otto-Magermotors mit Direkteinspritzung,
- bei dem ein für den Motorbetrieb durch eine mittels Motorparameter variable erste Hochdruck-Kraftstoffeinspritzung in einem vorbestimmten Kurbelwellen-Drehwinkelbereich vor OT gebildetes Magergemisch fremdgezündet wird und
- die Brenndauer des Magergemisches durch eine reduzierte zweite, variable Hochdruck-Kraftstoffeinspritzung in einem vorbestimmten Kurbelwellen-Drehwinkelbereich nach OT verlängert wird zur Abgas-Temperaturerhöhung, wobei
- zusätzlich die Zündung gesteuert oder geregelt nach "spät" verstellbar ist,
**dadurch gekennzeichnet,**
- **dass** in einem Teillastbereich in Abhängigkeit von Motorparametem die Ansaugluft entdrosselt wird und
- **dass** die Einspritzmenge der zweiten Kraftstoffeinspritzung bzw. Nacheinspritzung in Abhängigkeit der Ansaugluft-Drosselung derart gesteuert oder geregelt wird, dass
- ein globaler Lamda-Bereich von 1,0 bis 1,5 erhalten bleibt.

2. Heizverfahren nach Anspruch 1, **dadurch gekennzeichnet, dass** mit über eine Einrichtung rückgeführtem Abgas die Verbrennungsgeschwindigkeit des Magergemisches weiter reduziert wird.

3. Heizverfahren nach Anspruch 1 oder 2, **dadurch gekennzeichnet, dass** die Zündung zwischen 30° Kurbelwellen-Drehwinkel vor OT und 15° Kurbelwellen-Drehwinkel nach OT nach "spät" verstellt wird.

4. Heizverfahren nach einem der Ansprüche 1 bis 3, **dadurch gekennzeichnet,**
- **dass** die erste Einspritzmitte bzw. Mitte der Haupteinspritzung in einem Kurbelwellen-Drehwinkelbereich von 75° bis 25° vor OT und
- **dass** die zweite Einspritzmitte bzw. Mitte der Nacheinspritzung in einem Kurbelwellen-Drehwinkelbereich von 25° bis 100° nach OT getätigt wird.

5. Heizverfahren nach Anspruch 4, **dadurch gekennzeichnet,**
- **dass** die erste Einspritzmitte bzw. Mitte der Haupteinspritzung zwischen 55° und 35° Kurbelwellen-Drehwinkel vor OT und
- **dass** die zweite Einspritzmitte bzw. Mitte der Nacheinspritzung zwischen 60° und 80° Kurbelwellen-Drehwinkel nach OT getätigt wird.

6. Heizverfahren nach einem der Ansprüche 1 bis 5, **dadurch gekennzeichnet, dass** das Abgasheizen bei Überschreiten einer vorbestimmten Abgastemperatur und/oder mit Überschreiten einer vorbestimmten integrierten Kraftstoffmenge der Nacheinspritzung oder durch eine Zeitablaufsteuerung beendet wird.

## Claims

1. A method of heating an exhaust-gas catalytic converter in a lean-mix spark-ignition engine with direct ignition,
- wherein a lean mixture for operating the engine and formed by a first injection of fuel under high pressure, variable via engine parameters over a predetermined range of the angle of rotation of the crankshaft before the upper dead centre, is externally ignited and
- the time during which the lean mixture burns is extended by a reduced second injection of fuel under high pressure over a predetermined range of angular rotation of the crankshaft after the upper dead-centre position in order to increase the exhaust gas temperature, wherein
- the ignition is also adjustable to "late" under closed-loop or open-loop control,
**characterised in that**
- the intake air is de-throttled over a partial load range in dependence on engine parameters and
- the amount of fuel in the second or subsequent injection is so controlled in an open or closed loop in dependence on the intake air throttling that
- a global lambda range of 1.0 to 1.5 is maintained.

2. A method of heating according to claim 1, **characterised in that** the combustion rate of the lean mixture is further reduced by exhaust gas recycled by a device.

3. A method according to claim 1 or 2, **characterised in that** the ignition is adjusted to "late" between a crankshaft angle of rotation of 30° before the upper dead centre and a crankshaft angle of rotation of 15° after the upper dead centre.

4. A method according to any of claims 1 to 3, **characterised in that**
- the first central point of injection or of the main injection occurs at a range of angular rotation of the crankshaft from 75° to 25° before the upper dead centre and
- the centre of the second injection or centre of the subsequent injection occurs at a range of angular rotation of the crankshaft of 25° to 100° after the dead centre position.

5. A method according to claim 4, **characterised in that**
- the centre of the first injection or the centre of the main injection occurs at a crankshaft angle of rotation between 55° and 35° before the upper dead centre and
- the second centre of injection or centre of subsequent injection occurs at a crankshaft angle of rotation between 60° and 80° after the upper dead centre.

6. A method according to any of claims 1 to 5, **characterised in that** the exhaust-gas heating is terminated when a preset exhaust gas temperature is exceeded and/or when a predetermined amount of fuel incorporated during the subsequent injection is exceeded and/or by a time lapse control system.

## Revendications

1. Procédé de chauffage de catalyseur d'échappement de moteur Otto maigre à injection directe
- dans lequel, un mélange maigre formé pour l'exploitation du moteur par une première injection de carburant haute pression variable au moyen de paramètres moteur est allumé extérieurement en un domaine prédéterminé d'angle de rotation du vilebrequin avant le PMH et
- la durée de combustion du mélange maigre est prolongée par une deuxième injection variable de carburant haute pression en un domaine prédéterminé d'angle de rotation du vilebrequin après le PMH pour l'augmentation de la température des gaz d'échappement, où
- en outre, l'allumage peut, de manière commandée ou régulée, être réglable sur "tard",
**caractérisé en ce que**
- en une zone de charge partielle dépendant de paramètres moteur, l'air d'admission est restreint et
- la quantité injectée de la deuxième injection de carburant ou de la post-injection est commandée ou régulée de manière telle en fonction de la restriction de l'air d'admission qu'
- un domaine lambda global de 1,0 à 1,5 soit conservé.

2. Procédé de chauffage selon la revendication 1,
**caractérisé en ce que**
avec des gaz d'échappement recyclés par un dispositif, la vitesse de combustion du mélange maigre est encore réduite.

3. Procédé de chauffage selon la revendication 1 ou 2, **caractérisé en ce que**
l'allumage peut être réglé entre un angle de rotation du vilebrequin de 30 ° avant le PMH et un angle de rotation du vilebrequin de 15 ° après le PMH sur "tard".

4. Procédé de chauffage selon l'une quelconque des revendications 1 à 3,
**caractérisé en ce que**
- le premier milieu d'injection, respectivement milieu d'injection principale est effectué en un domaine d'angle de rotation du vilebrequin de 75 ° à 25 ° avant le PMH et
- le deuxième milieu d'injection, respectivement milieu de post-injection en un domaine d'angle de rotation du vilebrequin de 25 ° à 100 ° après le PMH.

5. Procédé de chauffage selon la revendication 4,
**caractérisé en ce que**
- le premier milieu d'injection, respectivement milieu d'injection principale est situé entre 55 ° et 35 ° d'angle de rotation du vilebrequin avant le PMH et
- le deuxième milieu d'injection ou milieu de post-injection entre 60 ° à 80 ° d'angle de rotation du vilebrequin après le PMH.

6. Procédé de chauffage selon l'une quelconque des revendications 1 à 5,
**caractérisé en ce que**
le chauffage des gaz d'échappement est terminé lors du dépassement d'une température des gaz d'échappement prédéterminée et/ou lors du dépassement d'une quantité de carburant intégrée prédéterminée de la post-injection ou par une commande de durée.
